# FASCICULE DE BREVET EUROPEEN

(11) **EP 1 063 148 B1**
(45) Date de publication et mention de la délivrance du brevet: **02.07.2003**
(21) Numéro de dépôt: 00420098.6
(22) Date de dépôt: 18.05.2000
(51) Int. Cl.: B62D 3/12

(54) **Poussoir pour carter de direction à crémaillère**
Druckstück für Zahnstangen- Lenkgetriebegehäuse
Yoke for rack-and-pinion steering gear housing

(30) Priorité: 21.06.1999 FR 9908046
(43) Date de publication de la demande: 27.12.2000
(73) Titulaire: Société de Mécanique d'Irigny, 69540 Irigny (FR)
(72) Inventeur: Pantale, David, 69126 Brindas (FR)
(74) Mandataire: Bratel, Gérard

(56) Documents cités:
- FR-A- 2 663 284

## Description

La présente invention concerne les directions à crémaillère, pour véhicules automobiles ; elle se rapporte, plus particulièrement, à un élément appelé poussoir, monté dans le carter d'une telle direction, et ayant pour rôle de presser élastiquement la crémaillère contre le pignon, lié à la colonne de direction, avec lequel la crémaillère doit être maintenue en prise avec un effort contrôlé.

Pour obtenir un fonctionnement satisfaisant d'un mécanisme de direction à crémaillère, il est nécessaire de maintenir le pignon et la crémaillère en engrènement. A cet effet, dans la technique actuelle, il est fait appel à une pièce mobile appelée poussoir, combinée avec des moyens élastiques tels que rondelle élastique ou ressort, un exemple étant donné par la demande de brevet européen N° 0860345. Ce dispositif permet un mouvement de la crémaillère et un effort de coulissement contrôlé de celle-ci, tout en corrigeant les jeux éventuels.

La demande de brevet français N° 2.663.284 , à partir duquel est établi le préambule de la revendication 1, décrit et illustre une réalisation particulière, dans laquelle la pièce poussoir traditionnelle est remplacée par des doigts élastiques moulés d'une seule pièce avec le carter, en matière synthétique. Les doigts élastiques, faisant ainsi partie intégrante du carter, viennent en appui sur la crémaillère à l'opposé de sa denture. Un bouchon, vissé sur le carter, comporte des prolongements flexibles dirigés vers l'intérieur du carter, qui appuient élastiquement les doigts précités sur la crémaillère, la force de pression étant réglable par le vissage du bouchon.

Une telle réalisation est satisfaisante sur le plan fonctionnel, mais elle possède un encombrement relativement important, dans la direction correspondant à l'axe central du bouchon vissé.

La présente invention vise à éviter cet inconvénient, en fournissant un dispositif de poussoir perfectionné, procurant un gain d'encombrement notable tout en conservant la possibilité de réglage, ainsi que les autres qualités fonctionnelles.

A cet effet, l'invention a pour objet un dispositif poussoir pour carter de direction à crémaillère, visant à maintenir la crémaillère en prise avec le pignon, le dispositif comprenant des doigts élastiques faisant partie intégrante du carter et venant en appui sur la crémaillère à l'opposé de sa denture, ainsi qu'au moins un élément à action élastique réglable en position et venant en appui sur les doigts précités, le dispositif étant caractérisé en ce que ledit élément à action élastique est une rondelle ou pastille logée dans ou intégrée à un bouchon vissable sur le carter, et appuyée directement sur les doigts précités, la rondelle ou pastille étant réalisée en un matériau élastique et/ou soumise à la poussée d'un organe élastique.

Ainsi le bouchon, qui sert de vis de réglage, loge ou intègre une pièce en forme de rondelle, donc peu épaisse, qui coopère avec les doigts appliqués sur la crémaillère, et qui fait office d'absorbeur des mouvements de ces doigts, tout en permettant d'exercer une pression variable sur ces doigts, donc sur la crémaillère.

Dans un premier mode de réalisation de l'invention, la rondelle est réalisée en un matériau élastique, de manière à assurer par elle-même les fonctions de pression et d'amortissement, auquel cas la rondelle est fixée directement dans un logement correspondant du bouchon, par exemple par collage, par une fixation mécanique ou par une fabrication moulée par bi-injection.

Dans une variante de l'invention, la rondelle est réalisée en un matériau rigide, auquel cas elle est montée mobile dans un logement correspondant du bouchon, un organe élastique tel que rondelle-ressort étant inséré dans ce logement, entre la rondelle et la paroi du bouchon formant le fond dudit logement.

Dans une autre variante de l'invention, le bouchon est lui-même réalisé en un matériau élastique, et constitue lui-même, dans ce cas, aussi bien l'élément en forme de pastille appuyé sur les doigts, que l'organe élastique.

Selon une forme de réalisation avantageuse, la rondelle ou pastille, ou la partie du bouchon assurant la même fonction, possède, sur sa face tournée vers la crémaillère, un évidement central de forme complémentaire de l'extrémité libre des doigts précités, de sorte que la rondelle ou pastille ou partie équivalente s'adapte exactement sur ces doigts.

L'invention sera de toute façon mieux comprise à l'aide de la description qui suit, en référence au dessin schématique annexé représentant, à titre d'exemples, trois formes d'exécution de ce poussoir pour carter de direction à crémaillère :
Figure 1 est une vue d'ensemble d'une direction à crémaillère, dont le carter est équipé d'un dispositif de poussoir conforme à l'invention ;
Figure 2 est une vue en coupe suivant II-II de figure 1, à échelle agrandie, montrant le détail du carter et de son poussoir, dans un premier mode de réalisation ;
Figure 3 est une vue en coupe similaire à figure 2, relative à une variante du dispositif de poussoir selon l'invention ;
Figure 4 est une vue en coupe similaire aux deux précédentes, relative à une autre variante du dispositif de poussoir selon l'invention.

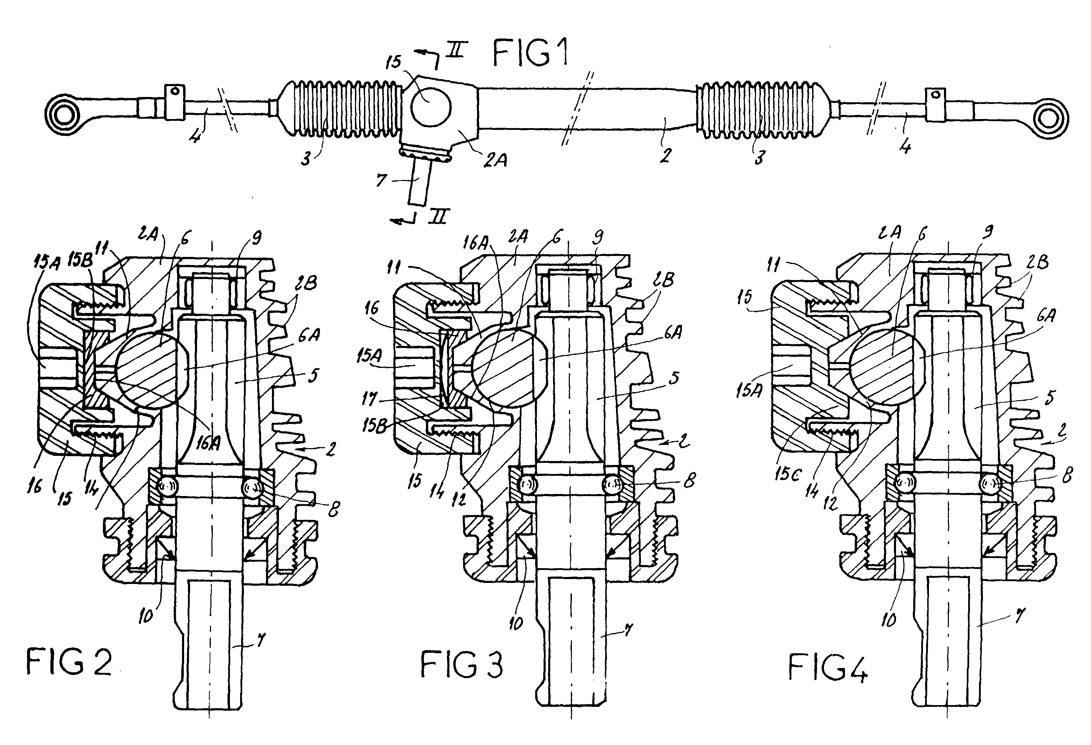

La figure 1 représente extérieurement une direction à crémaillère de véhicule automobile, dont elle montre le carter central tubulaire 2, les soufflets 3 et les biellettes 4 (côté roues). On s'intéresse ici, plus particulièrement, à la partie 2A du carter 2 qui renferme un pignon rotatif 5 en prise avec une crémaillère 6 coulissante (voir aussi figures 2 et suivantes), l'arbre 7 du pignon sortant hors de cette partie de carter 2A et étant raccordé à la colonne de direction, non représentée.

Le carter 2 est réalisé en matière synthétique de préférence armée, possédant par elle-même une certaine élasticité, les parties du carter 2 qui doivent être rigidifiées comportant à cet effet des nervures de raidissement extérieures 2B. Dans la partie 2A du carter, le pignon 5 est monté tournant par l'intermédiaire d'un roulement 8 et d'un palier d'extrémité 9. Un joint annulaire 10 assure l'étanchéité autour de l'arbre 7 du pignon 5, à l'endroit où l'arbre 7 sort du carter 2.

La partie 2A du carter 2 comporte un logement transversal, de forme générale semi-cylindrique, qui reçoit la crémaillère 6 en permettant le coulissement longitudinal de celle-ci, la denture 6A de la crémaillère étant en prise avec le pignon 5. Le logement de la crémaillère 6 est délimité par deux doigts élastiques symétriques 11 et 12, de profil arrondi, qui sont moulés d'une seule pièce avec le carter 2. Un interstice est ménagé entre les extrémités libres rapprochées des deux doigts élastiques 11 et 12. Ces deux doigts élastiques 11 et 12 s'appliquent sur le dos de la crémaillère 6, à l'opposé de la denture 6A de celle-ci.

Dans sa zone située autour des doigts élastiques 11 et 12, la partie de carter 2A comporte une ouverture circulaire 13, dont le bord est pourvu d'un filetage extérieur 14. L'ouverture 13 est obturée par un bouchon 15, pourvu d'un filetage intérieur adapté pour un vissage sur le filetage extérieur 14 de la partie de carter 2A. Le bouchon vissable 15 comporte extérieurement un évidement à six pans creux 15A, permettant sa manoeuvre à l'aide d'une clé.

Dans la forme de réalisation de la figure 2, le bouchon vissable 15 présente, intérieurement, un logement 15B recevant une rondelle 16 réalisée en un matériau élastique, par exemple en élastomère, l'axe de la rondelle 16 étant confondu avec celui du bouchon 15. La rondelle élastique 16 est fixée au fond du logement 15B du bouchon 15, par exemple par collage, par une fixation mécanique ou par une fabrication moulée par bi-injection.

Sur sa face opposée au fond du logement 15B, la rondelle élastique 16 possède un évidement central 16A, de forme complémentaire de celle de l'extrémité libre des doigts élastiques 11 et 12. La rondelle 16 est ainsi adaptée exactement sur ces doigts 11 et 12, le vissage du bouchon 15 sur le filetage 14 permettant de régler la position axiale de la rondelle 16 et d'appuyer plus ou moins fortement cette rondelle 16 sur les doigts 11 et 12. Ainsi, les doigts 11 et 12 sont eux-mêmes pressés plus ou moins fortement contre la crémaillère 6, ce qui permet d'ajuster l'effort de résistance au coulissement de la crémaillère 6, tout en absorbant les jeux d'usure et les vibrations.

La figure 3, sur laquelle les éléments correspondants sont désignés par les mêmes repères, montre une première variante dans laquelle la rondelle 16 est une pièce en matière rigide, montée mobile axialement dans le logement correspondant 15B du bouchon vissable 15. Une rondelle-ressort 17 est insérée et comprimée au fond du logement 15B, sous la rondelle 16, et sert ici d'organe élastique soumettant la rondelle 16 à un effort de poussée, qui appuie élastiquement ladite rondelle 16 sur les doigts 11 et 12.

La figure 4 montre une autre variante, dans laquelle le bouchon vissable 15 est lui-même réalisé en un matériau élastique, et comporte une partie intérieure 15C circulaire qui est directement appuyée sur les doigts 11 et 12. Dans ce cas, c'est l'ensemble du bouchon 15 qui constitue l'organe élastique, exerçant une pression sur les doigts 11 et 12 et absorbant les jeux et vibrations.

Le dispositif de poussoir, précédemment décrit, s'applique plus particulièrement à des directions manuelles, mais son domaine d'application peut être élargi aux directions assistées de véhicules automobiles.

L'on ne s'éloignerait pas du cadre de l'invention, telle que définie dans les revendications annexées, par des modifications de forme du carter 2 et de son bouchon 15, ou par le recours à tous matériaux convenables pour la réalisation de la rondelle élastique 16, ou encore, dans le cas d'un rondelle 16 en matière rigide, en remplaçant la rondelle-ressort 17 par tout organe élastique équivalent.

## Revendications

1. Dispositif de poussoir pour carter (2,2A) de direction à crémaillère pour véhicule automobile, visant à maintenir la crémaillère (6) en prise avec le pignon (5), le dispositif comprenant des doigts élastiques (11,12) faisant partie intégrante du carter (2,2A) et venant en appui sur la crémaillère (6) à l'opposé de sa denture (6A), ainsi qu'au moins un élément à action élastique réglable en position et venant en appui sur les doigts (11,12) précités, **caractérisé en ce que** ledit élément à action élastique est une rondelle ou pastille (16;15C) logée dans ou intégrée à un bouchon (15) vissable sur le carter (2,2A), et appuyée directement sur les doigts (11,12) précités, la rondelle ou pastille (16) étant réalisée en un matériau élastique et/ou soumise à la poussée d'un organe élastique (17;15).

2. Dispositif de poussoir selon la revendication **1**, **caractérisé en ce que** la rondelle (16), réalisée en un matériau élastique, est fixée directement dans un logement (15B) correspondant du bouchon (15), notamment par collage, par une fixation mécanique ou par une fabrication moulée par bi-injection.

3. Dispositif de poussoir selon la revendication 1, **caractérisé en ce que** la rondelle (16) est réalisée en un matériau rigide, et est montée mobile dans un logement correspondant (15B) du bouchon (15), un organe élastique tel que rondelle-ressort (17) étant inséré dans ce logement (15B), entre la rondelle (16) et la paroi du bouchon (15) formant le fond dudit logement (15B).

4. Dispositif de poussoir selon la revendication 1, **caractérisé en ce que** le bouchon (15) est lui-même réalisé en matériau élastique, et constitue lui-même aussi bien l'élément en forme de pastille (15C) appuyé sur les doigts (11,12), que l'organe élastique.

5. Dispositif de poussoir selon l'une quelconque des revendications 1 à 4, **caractérisé en ce que** la rondelle ou pastille (16) possède, sur sa face tournée vers la crémaillère (6), un évidement central (16A) de forme complémentaire de l'extrémité libre des doigts (11,12) précités, de sorte que la rondelle ou pastille (16) s'adapte exactement sur ces doigts (11, 12).

## Patentansprüche

1. Andrückvorrichtung für ein Zahnstangenlenkgehäuse (2, 2A) für ein Kraftfahrzeug, die darauf hinwirkt, die Zahnstange (6) in Eingriff mit dem Gelenkzapfen (5) zu halten, wobei die Vorrichtung elastische Finger (11, 12) umfasst, die integraler Bestandteil des Gehäuses (2, 2A) sind und an der Zahnstange (6) an der der Verzahnung (6A) gegenüberliegenden Seite in Anlage kommen, sowie mindestens ein lageverstellbares Teil mit Federwirkung, das an den vorgenannten Fingern (11, 12 ) in Anlage kommt, **dadurch gekennzeichnet, dass** das Teil mit Federwirkung eine Scheibe oder ein Plättchen (16; 15C) ist, die/das in einem am Gehäuse (2, 2A) anschraubbaren Stopfen (15) untergebracht oder integriert ist, und direkt an die vorgenannten Finger (11, 12) gedrückt ist, wobei die Scheibe oder das Plättchen (16) aus einem federnden Material hergestellt ist und/oder dem Druck eines federnden Glieds (17; 15) unterliegen.

2. Andrückvorrichtung nach Anspruch 1, **dadurch gekennzeichnet, dass** die aus einem federnden Material hergestellte Scheibe (16) direkt in einer entsprechenden Aufnahme (15B) des Stopfens (15), insbesondere durch Verklebung, durch eine mechanische Befestigung oder durch ein Zweikomponentenspritzgussverfahren befestigt ist.

3. Andrückvorrichtung nach Anspruch 1, **dadurch gekennzeichnet, dass** die Scheibe (16) aus einem steifen Material besteht und in einer entsprechenden Aufnahme (15B) des Stopfens (15) beweglich angebracht ist, wobei ein federndes Glied wie eine Ringfeder (17) in diese Aufnahme (15B) zwischen der Scheibe (16) und der Wand des Stopfens (15), die den Boden der Aufnahme (15B) bildet, eingesetzt ist.

4. Andrückvorrichtung nach Anspruch 1, **dadurch gekennzeichnet, dass** der Stopfen (15) selbst aus einem federnden Material hergestellt ist und selbst sowohl das plättchenförmige Glied (15C), das auf die Finger (11, 12) drückt, als auch das federnde Glied darstellt.

5. Andrückvorrichtung nach einem der Ansprüche 1 bis 4, **dadurch gekennzeichnet, dass** die Scheibe oder das Plättchen (16) an ihrer/seiner der Zahnstange (6) zugewandten Fläche eine zentrale Ausnehmung (16A) aufweist, deren Form komplementär zum freien Ende der vorgenannten Finger (11, 12) ist, so dass die Scheibe oder das Plättchen (16) mit diesen Fingern (11, 12) genau zusammenpasst.

## Claims

1. A pusher device for a rack and pinion steering housing (2, 2A) for an automobile vehicle, intended to maintain the rack (6) in engagement with the pinion (5), said device comprising elastic fingers (11, 12) forming an integral part of the housing (2, 2A) and bearing against the rack (6) opposite the teeth (6A) thereof, as well as at least one elastically acting element, the position of which can be adjusted and which bears on the aforementioned fingers (11, 12), **characterised in that** said elastically acting element is a washer or pad (16; 15C) which is accommodated in or integral with a cap (15) which can be screwed on to the housing (2, 2A) and which element bears directly on the aforementioned fingers (11, 12), the washer or pad (16) being made of an elastic material and/or being subjected to the thrust of an elastic member (17; 15).

2. A pusher device according to claim 1, **characterised in that** the washer (16) which is made of an elastic material is fixed directly in a corresponding receiver (15B) in the cap (15), particularly by adhesive bonding, by a mechanical fixing or by a product formed by bi-injection moulding.

3. A pusher device according to claim 1, **characterised in that** the washer (16) is made of a rigid material and is movably mounted in a corresponding receiver (15B) in the cap (15), an elastic element such as a spring washer (17) being inserted in said receiver (15B) between the washer (16) and the wall of the cap (15) forming the base of said receiver (15B).

4. A pusher device according to claim 1, **characterised in that** the cap (15) itself is made of an elastic material, and itself constitutes both the pad-shaped element (15C) which bears on the fingers (11, 12) and the elastic member.

5. A pusher device according to any one of claims 1 to 4, **characterised in that** on its face facing the rack (6) the washer or pad (16) has a central recess (16A) which is complementary in shape to the free end of the aforementioned fingers (11, 12) so that the washer or pad (16) fits said fingers (11, 12) exactly.
